Europäisches Patentamt

European Patent Office

Office européen des brevets

(11) Numéro de publication: **0 274 093**
**A1**

## (12) DEMANDE DE BREVET EUROPEEN

(21) Numéro de dépôt: 87118664.9

(22) Date de dépôt: 16.12.87

(51) Int. Cl.⁴: **A01G 31/02**

(30) Priorité: 23.12.86 CH 5197/86

(43) Date de publication de la demande:
**13.07.88 Bulletin 88/28**

(84) Etats contractants désignés:
**AT BE DE FR NL SE**

(71) Demandeur: **ARTFLOR S.A.**
**25, rue des Voisins Case Postale 177**
**CH-1211 Genève(CH)**

(72) Inventeur: **Jaquot, Pascal**
**10, route de Vandoevres**
**CH-1253 GENEVE(CH)**

(74) Mandataire: **Micheli & Cie**
**118, rue du Rhône Case postale 47**
**CH-1211 Genève 6(CH)**

(54) **Dispositif de culture et/ou de présentation pour plantes d'intérieur.**

(57) Il comporte un bac (1) destiné à recevoir de l'eau dans sa partie inférieure, au moins un pot de culture (8) et un indicateur-remplisseur d'eau (9). Il comporte une pièce (5) obturant la partie supérieure du bac (1) dont elle épouse la forme et des moyens d'appui (4) maintenant cette pièce (5) en position de service. Cette pièce (5) comporte au moins un orifice recevant la partie supérieure du pot de culture (8) qui repose sur le fond du bac (1).

FIG. 2

EP 0 274 093 A1

## DISPOSITIF DE CULTURE ET/OU DE PRESENTATION POUR PLANTES D'INTERIEUR

Parmi les systèmes de culture pour plantes d'intérieur, l'un des plus répandus est le système d'hydroculture LUWASA (marque déposée) qui comprend un bac ou récipient étanche et résistant aux acides dans lequel sont placés, d'une part, un indicateur de niveau d'eau, d'autre part, un certain nombre de cylindres destinés à recevoir les pots dans lesquels sont placées les plantes ; tout l'espace compris entre cet indicateur de niveau et ces cylindres étant rempli de granulés d'argile expansée. De plus, les pots recevant les plantes sont généralement remplis de granulés d'argile expansée et lorsqu'ils sont placés à l'intérieur des cylindres, reposant sur le fond du bac, une couche supplémentaire d'argile expansée est placée dans le bac pour cacher le bord supérieur de ces pots de culture.

Ce système d'hydroculture décrit par exemple dans le brevet US-A-4.037.363 fonctionne très bien, toutefois il présente pour les personnes professionnelles ou non, chargées de l'entretien périodique de ces plantes de graves inconvénients dont les principaux sont les suivants :

1. Le bac étant rempli de granulés d'argile expansée, la quantité d'eau en réserve, qui ne doit pas dépasser un certain niveau, généralement quatre centimètres d'épaisseur, pour éviter un pourrissement des plantes, est relativement faible, nécessitant un remplissage fréquent de l'ordre de deux fois par mois.

2. Pour remplacer des plantes, ce qui s'effectue généralement 2 à 4 fois par an, il faut enlever une couche de granulé d'argile expansée et l'entreposer dans un récipient avant de pouvoir retirer les pots de culture renfermant les plantes.

Il est fréquent de devoir changer des plantes du fait qu'elles sont malades, dans ce cas, il faut vider la totalité de l'argile expansée pour pouvoir nettoyer ces granulés ainsi que le bac et les cylindres afin d'éviter que la maladie ne se communique aux autres plantes ou aux nouvelles plantes de remplacement. Ceci occasionne une manutention importante pouvant entraîner la souillure des sols, moquettes, etc.

3. Lors de l'entretien périodique si l'on veut changer de place les plantes d'un bac, il faut enlever une couche d'argile expansée, puis changer les pots de place et ce faisant il arrive souvent qu'un cylindre soit soulevé par inadvertance avec le pot. Dans un tel cas il faut à nouveau vider complètement le bac, des granulés d'argile expansée s'étant introduits dans l'espace réservé aux pots.

La présente invention a pour objet un dispositif de culture et/ou de présentation de plantes d'intérieur tendant à obvier aux inconvénients précités, tout en garantissant de bonnes conditions pour les plantes.

Le dispositif selon l'invention se distingue par les caractéristiques énumérées aux revendications.

Le dessin annexé illustre schématiquement et à titre d'exemple une forme d'exécution et une variante du dispositif selon l'invention.

La figure 1 est une vue en perspective du dispositif de culture.

La figure 2 est une coupe suivant la ligne II-II de la figure 1.

La figure 3 est une coupe à plus grande échelle et partielle illustrant un détail du dispositif.

Les figures 4 et 5 illustrent deux éléments d'une variante du dispositif.

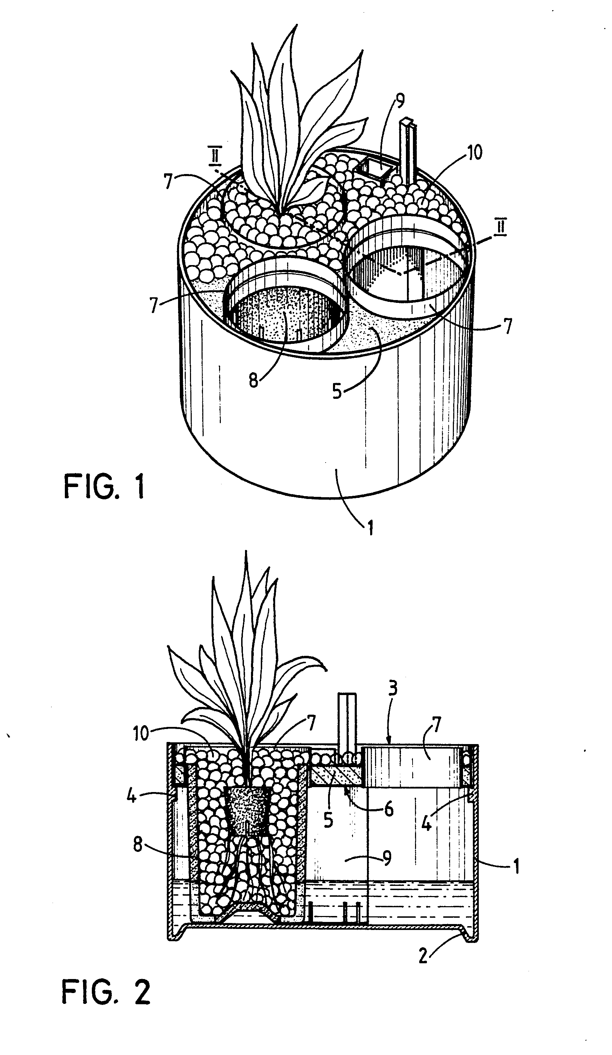

Le dispositif de culture pour plantes d'intérieur illustré aux figures 1 à 3 est un dispositif utilisant le système de l'hydroculture ; il comporte un bac 1 ou récipient résistant aux acides et divers produits chimiques utilisés soit pour la culture comme additifs soit pour le nettoyage. Ce bac 1 peut comme dans l'exemple illustré comporter un rebord inférieur 2 de sorte qu'il ne repose sur le sol que par sa périphérie inférieure. Des bacs à fond plat sans rebord peuvent bien évidemment être également utilisés.

Dans des variantes la forme de ces bacs 1 peut être conçue pour être empilable.

A proximité de son bord supérieur 3, le bac 1 comporte des moyens d'appui constitués dans l'exemple illustré par des saillies 4 solidaires de la paroi du bac 1 et s'étendant vers l'intérieur de celui-ci. Dans d'autres exécutions, ces moyens peuvent être constitués par une nervure continue, par des organes rapportés ou tout autre élément propre à définir une surface d'appui sensiblement parallèle au bord supérieur 3 du bac 1.

Le dispositif comporte encore un plateau 5 dont la forme extérieure s'emboîte dans l'ouverture du bac 1 et dont le bord de la surface inférieure 6 vient reposer sur les saillies 4. Ce plateau 5 est constitué dans la forme d'exécution illustrée par une plaque de matière plastique expansée et comporte trois ouvertures circulaires dans lesquelles sont enfilées des chemises 7. Ces chemises 7 comportent une nervure circulaire limitant leur introduction dans les orifices du plateau 5.

Ces chemises 7 définissent des jupes de guidage dont la hauteur est suffisante pour maintenir en position de service des pots de culture conventionnels 8 reposant sur le fond du bac 1 et dont la partie supérieure est guidée par lesdites chemises dont le diamètre correspond au diamètre externe de ce pot 8.

Le plateau comporte encore un orifice rectangulaire recevant un dispositif de remplissage et de contrôle du niveau d'eau conventionnel 9 reposant également sur le fond du bac 1.

La partie supérieure du plateau 5 est recouverte d'une mince couche de granulés d'argile expansée 10 afin de cacher ce plateau 5 et les chemises 7. Les pots de culture 8 sont eux bien entendu remplis d'argile expansée comme cela est déjà le cas actuellement.

Les chemises 7 formant les jupes de guidage et de maintien des pots 8 peuvent être en métal, matière plastique ou tout autre matière adéquate. De même le plateau peut être en bois, en tôle, en éternite, etc.

Ce dispositif présente de grands avantages pour son entretien dont les principaux sont les suivants :

1. Le bac 1 n'est pas rempli de granulés d'argile expansée. Ainsi son poids en service est grandement réduit et la réserve d'eau, pour une épaisseur d'eau donnée est beaucoup plus grande, environ quatre fois plus grande. De ce fait, le remplissage peut intervenir à intervalles plus éloignés, de l'ordre de deux mois.

2. Pour chacune des plantes, il suffit de retirer les pots 8 hors des jupes 7 et de replacer de nouveaux pots. Aucune manutention de granulés d'argile expansée n'est nécessaire.

3. Pour procédé au lavage et nettoyage du bac 1 il suffit de retirer les pots 8 comme pour l'échange des plantes, puis d'enlever le plateau 5. Pour éviter d'enlever séparément la couche de granulé 10, ce plateau 5 peut comporter un rebord périphérique.

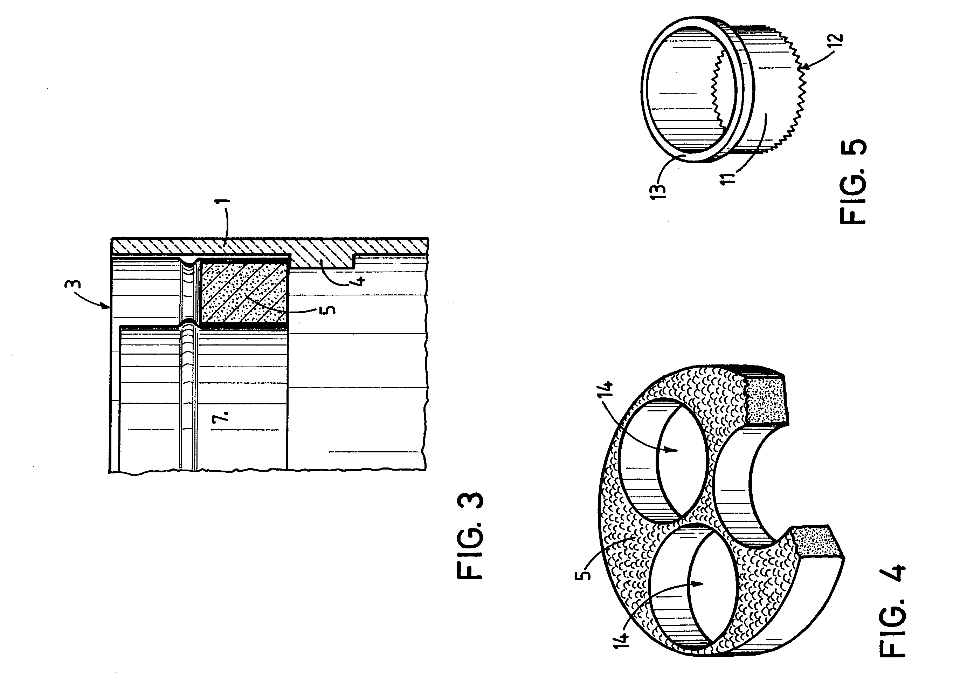

Dans la variante illustrée aux figures 4 et 5, le plateau 5 est constitué par une plaque épaisse en matière plastique expansée dont la surface supérieure est venue de fabrication avec un fini de surface imitant des granulés d'argile expansée. Cette plaque pleine peut être teintée dans la masse ou peinte en brun sur sa surface supérieure.

Des éléments cylindriques 11 illustrés à la figure 5 présentent un diamètre interne correspondant aux différents pots de culture 8. Ces éléments en matière plastique ou en métal présentent un bord 12 inférieur dentelé et un rebord supérieur 13.

A l'aide d'un élément 11, on découpe à l'instar d'une scie des orifices 14 dans la plaque 5 aux emplacements où l'on veut pouvoir mettre des plantes. Ces éléments 11 sont ensuite enfilés dans ces orifices et servent de jupes de guidage pour les pots de culture.

Il est évident que la forme de la section transversale des bacs 1 peut être quelconque pour autant que la périphérie du plateau correspondant soit la même.

Ces dispositifs selon l'invention se distinguent par rapport aux systèmes existants principalement par une plus grande réserve d'eau, une grande légèreté, une facilité d'échange des plantes et de nettoyage.

De très nombreuses formes d'exécution ou variantes différentes de celles illustrées peuvent être envisagées sans sortir du cadre de la protection revendiquée.

En particulier, les plateaux peuvent être réalisés en toutes matières, plastique, tôle, plâtres, fibro-ciment, etc. Leur surface supérieure peut être munie d'un décor ou de formation rappelant des boules d'argile expansée, des morceaux d'écorce ou tout autre élément décoratif désiré. Ces surfaces supérieures peuvent recevoir un revêtement ou couche ignifuge.

Ces plateaux peuvent comporter un rebord périphérique s'étendant verticalement. Leur surface supérieure peut présenter un décor telle l'impression d'une photographie ou d'un autre motif. Un rebord s'étendant verticalement peut également être prévu autour de chaque ouverture rendant ainsi superflu l'utilisation des éléments cylindriques 11. Des trous ou passages peuvent être aménagés dans ces plateaux ou à leur périphérie pour augmenter la ventilation du bac 1.

A la place de reposer sur des organes de retenues solidaires du bac, le plateau peut comporter une jupe ou rebord extérieur s'étendant vers le bas et coiffant la tranche supérieure du bac. Tout autre moyen de fixation du plateau au bac peut être envisagé tel que bandes autocollantes, points de colle, coincement. La tranche périphérique du plateau 5 peut notamment comporter des saillies déformables lors de son introduction dans le bac 1 et assurent sa fixation en position de service par coincement.

Dans d'autres formes d'exécution, le plateau peut être constitué d'une membrane en matière plastique ou en caoutchouc synthétique ou naturel, tendue et fixée sur l'orifice supérieur du bac et dans laquelle des orifices sont découpés dont la forme et les dimentions correspondent aux pots de culture qui y seront introduits. Généralement l'ouverture est légèrement plus petite que la section du pot de culture pour que lors de l'introduction de celui-ci dans cette ouverture, la membrane soit déformée élastiquement et plaque bien contre le pot le maintenant fermement en place.

Dans d'autres formes d'exécution encore, le plateau peut être remplacé par un bloc de matière plastique expansée remplissant la presque totalité du bac, ne laissant que l'espace ou volume nécessaire pour la réserve d'eau. Ceci peut être obtenu par une surface inférieure concave ou présentant une ou plusieurs creusures dans ce bloc. Ce bloc présente des ouvertures traversantes dans lesquelles viennent se loger les pots de culture.

Pour des impératifs de fabrication, les plateaux et blocs peuvent être réalisés en deux ou plusieurs pièces assemblables.

Il est possible d'incorporer des corps étrangers, par exemple des graviers ou des granulés d'argile expansée dans la masse des plateaux et blocs de telle manière que ces éléments émergent de la surface supérieure du plateau ou du bloc pour lui donner un aspect particulier.

D'autres variantes comportent à la place du plateau ou du bloc une pièce rigide présentant en coupe la forme d'un U dont la partie dorsale présente une forme correspondante à l'ouverture du bac. Cette partie dorsale forme l'obturation supérieure du bac, les parties latérales du U venant reposer sur le fond du bac. Des ouvertures pratiquées dans la partie dorsale du U reçoivent les pots de culture. A la place de présenter la forme d'un U, cette pièce peut présenter la forme d'un corps creux pouvant s'emboîter dans le bac. Le fond de ce corps creux présente alors les ouvertures recevant les pots de culture.

On peut également prévoir que les pots de culture se fixent par emboîtage par exemple ou encliquetage dans les orifices d'un plateau. Dans ce cas, ce sont les pots de culture qui maintiennent le plateau en position de service dans le bac. Ces pots peuvent aussi être fixés à demeure dans les orifices du plateau et en constituer leurs moyens de maintien. Les pots renfermant les plantes sont alors disposés dans les pots fixés au plateau.

Il est évident que le dispositif décrit peut être utilisé pour la présentation de plantes artificielles qui seraient placées dans les pots 8 à la place des plantes vivantes. Dans ce cas il n'est pas besoin de remplir le bac avec de l'eau. Des aménagements mixtes de plantes naturelles et artificielles peuvent également être prévues. Pour compléter un aménagement on peut également planter directement dans la plaque 5 de polyuréthane la tige de plantes ou fleurs artificielles.

**Revendications**

1. Dispositif de culture et/ou de présentation de plantes en pot comportant un bac destiné à recevoir de l'eau dans sa partie inférieure et un indicateur-remplisseur d'eau, caractérisé par le fait qu'il comporte une pièce obturant la partie supérieure du bac dont elle épouse la forme et des moyens de maintien de cette pièce en position de service ; par le fait que cette pièce comporte au moins un orifice recevant la partie supérieure du pot qui repose sur le fond du bac.

2. Dispositif selon la revendication 1, caractérisé par le fait que les orifices de la pièce sont munis de jupes pour guider les pots sur une plus grande hauteur.

3. Dispositif selon la revendication 1 ou la revendication 2, caractérisé par le fait qu'une couche de granulés d'argile expansée recouvre la surface supérieure de la pièce.

4. Dispositif selon la revendication 1 ou la revendication 2, caractérisé par le fait que la partie supérieure de la pièce comporte un fini de surface imitant des granulés d'argile expansée, ou des morceaux d'écorce.

5. Dispositif selon l'une des revendications précédentes, caractérisé par le fait que l'indicateur-remplisseur repose sur le fond du bac et émerge au travers d'un orifice de forme correspondante de la pièce.

6. Dispositif selon la revendication 2, caractérisé par le fait que les jupes comportent des moyens limitant leur introduction dans les orifices de la pièce.

7. Dispositif selon la revendication 2 ou la revendication 6, caractérisé par le fait que les jupes présentent un bord inférieur dentelé.

8. Dispositif selon l'une des revendications précédentes, caractérisé par le fait que la pièce est constituée d'une plaque maintenue par fixation dans la partie supérieure du bac.

9. Dispositif selon l'une des revendications 1 à 7, caractérisé par le fait que la pièce est constituée par une plaque reposant sur des moyens d'appui fixés dans la paroi dudit bac.

10. Dispositif selon l'une des revendications 1 à 7, caractérisé par le fait que la pièce est un bloc reposant sur le fond du bac et remplissant la quasi totalité de celui-ci, sa surface inférieure présentant un ou des évidements définissant un volume pour la réserve d'eau.

11. Dispositif selon l'une des revendications 1 à 7, caractérisé par le fait que la pièce présente une partie dorsale de forme et dimension correspondant à l'ouverture supérieure du bac et une ou plusieurs parties latérales s'étendant dans le bac et reposant sur le fond de celui-ci en position de service.

12. Dispositif selon l'une des revendications 1 à 7, caractérisé par le fait que la pièce est constituée par une membrane tendue sur le bord supérieur du bac.

FIG. 1

FIG. 2

FIG. 3

FIG. 4

FIG. 5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | DE-A-2 417 498 (BAYER) <br> * Page 3, dernier paragraphe - page 4, paragraphe 1; figure 1 * <br>--- | 1,2,3,9,11 | A 01 G 31/02 |
| Y | FR-A-1 361 055 (ROULLEAU-GALLAIS) <br> * Page 1, colonne de droite, paragraphe 6 - page 2, colonne de gauche, paragraphe 4; figures 1-4 * <br>--- | 1,2,5,9,11 | |
| Y | CH-A- 510 422 (CHOUX) <br> * En entier * | 3 | |
| A | <br>--- | 4 | |
| Y | EP-A-0 130 147 (INTERHYDRO) <br> * Page 3, ligne 16 - page 6, ligne 31; figures 1,23 * | 5 | |
| A | <br>--- | 1,3,9 | |
| A | FR-A-2 236 409 (FERRAND) <br> * Page 2, ligne 14 - page 3, ligne 20; figures 1-3 * <br>--- | 1,9 | |
| A | US-A-3 852 912 (DILLER) <br> * En entier * <br>----- | 1,9 | **DOMAINES TECHNIQUES RECHERCHES (Int. Cl.4)** <br><br> A 01 G <br> A 47 G |

Le présent rapport a été établi pour toutes les revendications

| Lieu de la recherche | Date d'achèvement de la recherche | Examinateur |
|---|---|---|
| LA HAYE | 15-03-1988 | HERYGERS J.J. |